# EUROPÄISCHE PATENTANMELDUNG

(11) **EP 4 475 018 A1**
(43) Veröffentlichungstag der Anmeldung: **11.12.2024**
(21) Anmeldenummer: 23177485.2
(22) Anmeldetag: 06.06.2023
(51) Int. Cl.: G06F 21/55

(54) **EINHEITLICHES ÜBERWACHEN EINES PROGRAMMIERBAREN SYSTEMS**

(71) Anmelder: Siemens Aktiengesellschaft, 80333 München (DE)
(72) Erfinder: Falk, Rainer, 85435 Erding (DE); Feist, Christian Peter, 80689 München (DE); Hornung, Peter, 91054 Erlangen (DE); Mantel, Martin, 91325 Adelsdorf (DE); Pyka, Stefan, 85570 Markt Schwaben (DE); Sperl, Franz, 92526 Oberviechtach (DE); Zeschg, Thomas, 81543 München (DE)
(74) Vertreter: Siemens Patent Attorneys

(57) **Zusammenfassung**

Die Erfindung betrifft ein Überwachungseinheit (31) zum Überwachen eines programmierbaren Systems (10), aufweisend:
- Eine Erfassungskomponente, ausgebildet Rohdaten bezüglich auftretender Ereignisse auf dem programmierbaren System (10) zu erfassen, wobei die auftretenden Ereignisse durch eine Vielzahl von Software-Komponenten (1) des programmierbaren Systems (10) erzeugt werden,
- eine Ableitungskomponente, ausgebildet jeweils eine Anwendungsfunktionalität der Vielzahl an Software-Komponenten (1) aus den durch die Rohdaten erfassten auftretenden Ereignisse abzuleiten, und
- eine Generierungskomponente (311), ausgebildet einen Log-Datensatz (21) zu generieren, wobei der Log-Datensatz (21) die Anwendungsfunktionalität der Vielzahl von Software-Komponenten (1) des programmierbaren Systems (10) angibt.

Außerdem betrifft die Erfindung ein übergeordnetes technisches System und ein zugehöriges Verfahren.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft eine Überwachungseinheit zum Überwachen eines programmierbaren Systems. Außerdem betrifft die Erfindung ein übergeordnetes technisches System und ein zugehöriges Verfahren.

### Beschreibung des Stands der Technik

Industrielle Geräte zeichnen sich immer stärker durch eine zunehmende Flexibilisierung ihrer Funktionalität aus. Diese wird beispielsweise ermöglicht durch nachladbare Applikationen, mit denen die Gerätefunktionalität auch im Feld einfach und schnell angepasst werden kann. Zudem ist eine zunehmende Vernetzung von industriellen Geräten in Automatisierungsanlagen festzustellen. Diese genannten, aber auch weitere Aspekte erhöhen die Komplexität, die Fehleranfälligkeit und die Angreifbarkeit solcher industriellen Anlagen.

Um dieser Komplexität zu begegnen, wird oftmals ein Logging-System (= Logging-Komponente) installiert, welches Daten von möglichst vielen Komponenten aus der Anlage sammelt (beispielsweise in einer Log-Datenbank), aggregiert und den Anwendern für Auswertungen zur Verfügung stellt. Diese Auswertungen können dann dazu dienen, Fehler im Gesamtsystem zu finden, aber auch, erfolgte oder versuchte Angriffe und mögliche Schwachstellen zu entdecken und Gegenmaßnahmen einzuleiten.

Allerdings ist das Verfahren zum Sammeln der Daten nicht durchgängig auf verlässliche Art und Weise implementiert. Bisher werden Logdaten jeweils durch die laufenden Applikationen generiert und mit Hilfe eines geräte-spezifischen Logging-Mechanismus in eine Log-Datenbank geschrieben. Diese können dann durch spezielle Anwendungen wie z.B. Intrusion Detection Systeme (IDS) ausgelesen und analysiert werden. Moderne IDS arbeiten zwar oft mit statischen Analysemethoden, verwenden aber auch heuristische Methoden. Grundvoraussetzung ist aber immer, dass dem IDS die für die Analyse notwendigen Daten durch Sensorik o.Ä. in Form von Logdaten bereitgestellt werden.

Die Bereitstellung von Daten durch laufende Applikationen für das Logging ist naturgemäß nicht verlässlich, diese Daten können entweder (teilweise) unterdrückt oder entweder schon bei der Erzeugung oder auch bei der Übertragung in die Log-Datenbank manipuliert werden. Letzteres ist insbesondere dann relevant, wenn das Schreiben der Log-Datenbank durch eine zentrale Komponente erfolgt, der vor dem Schreiben die jeweiligen Logdaten übergeben werden.

Die Art und die Anzahl der Logdaten hängen in der Regel von der Applikation oder der Systemkomponente ab, welche die Daten bereitstellt. Diese können unterdrückt werden oder von einem Angreifer manipuliert werden.

Wenn Apps von Drittanbietern bereitgestellt werden, muss in der Praxis davon ausgegangen werden, dass diese Log-Daten nicht auf eine einheitliche Art bereitstellen. Auch ist es möglich, dass manche Apps keine Logdaten bereitstellen, oder dass sie nur unzureichende Logdaten bereitstellen. Auch können manche Apps, insbesondere Apps von Drittanbietern, keine oder nicht ausreichende (z.B. hinsichtlich zu erfüllender Security-Standards) Logdaten bereitstellen.

Werden die Logdaten zentral von einer Logging-Komponente verarbeitet und in eine Log-Datenbank geschrieben, hängt die Verlässlichkeit des gesamten Logging-Mechanismus davon ab, wie diese Logging-Komponente ins Gesamtsystem integriert ist. Insbesondere wenn Logdaten von einem IDS (z.B. HIDS, NIDS, ...) analysiert und weiterverarbeitet werden, ist es wichtig, dass die Logdaten sowohl integer als auch vollständig sind.

Auch ist bekannt, die durch einen Benutzer auf einem System ausgeführten Aktionen zu loggen. Dabei können insbesondere auch Kommandos geloggt werden, die mit erhöhten Privilegien ausgeführt wurden (z.B. mittels sudo bei Linux-basierten Systemen). Eine Erweiterung dieses Ansatzes umfasst das Loggen von ausgeführten Kommandos eines Benutzers (z.B. Administrator), nachdem dieser eine Session mit erhöhten Privilegien gestartet hat. Dies ermöglicht eine Zuordnung von als root (UID=0) ausgeführten Aktionen zu einem interaktiven Benutzer (z.B. bestimmtes Administratorkonto).

Von Windows und Linux sind Auditing-Subsysteme bekannt. Bei Linux kann z.B. auditd verwendet werden, um Zugriffsereignisse (z.B. Schreibzugriff auf eine Datei durch eine Applikation) zu erkennen und zu melden. Diese werden anschließend in einer Logdatei, z.B. /var/log/audit/audit.log, hinterlegt. Unter Windows kann die Audit Policy konfiguriert werden, um z.B. Änderungen an bestimmten Dateien zu protokollieren. Diese Ereignisse werden dann unter bestimmten IDs (ID: Identifier) im Windows Event Log abgespeichert, wo sie betrachtet und ausgewertet werden können.

Auch sind Security Information and Event Management Systeme (SIEM-Systeme) bekannt, um Security-Events zu loggen und auch auszuwerten. Dadurch können laufende Angriffe erkannt werden.

Auch sind Intrusion Detection Systeme (IDS) bekannt, die Angriffe erkennen. Diese können die Konfiguration auf Hosts (HIDS, host-based intrusion detection system) oder die Netzwerkkommunikation (NIDS, network-based intrusion detection system) analysieren. Ein IDS kann allgemein eine Änderung des Verhaltens (Anomaly-based IDS) oder ein bekanntes Angriffsmuster (Signature-based IDS) als Angriff erkennen.

Auch sind Lösungen für ein File Integrity Monitoring (FIM) bekannt, die Änderungen an einem Dateisystem erkennen.

Die Aufgabe der Erfindung besteht darin, eine Lösung für eine verbesserte Überwachung eines programmierbaren Systems anzugeben.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Überwachungseinheit zum Überwachen eines programmierbaren Systems, aufweisend:
- Eine Erfassungskomponente, ausgebildet Rohdaten bezüglich auftretender Ereignisse auf dem programmierbaren System zu erfassen, wobei die auftretenden Ereignisse durch eine Vielzahl von Software-Komponenten des programmierbaren Systems erzeugt werden,
- eine Ableitungskomponente, ausgebildet jeweils eine Anwendungsfunktionalität der Vielzahl an Software-Komponenten aus den durch die Rohdaten erfassten auftretenden Ereignisse abzuleiten, und
- eine Generierungskomponente, ausgebildet einen Log-Datensatz, insbesondere umfassend ein Datum oder mehrere Daten, zu generieren, wobei der Log-Datensatz die Anwendungsfunktionalität der Vielzahl von Software-Komponenten des programmierbaren Systems angibt.

Das programmierbare System ist insbesondere ausgebildet als:
- ein industrielles System und/oder
- ein Automatisierungssystem und/oder
- eine programmierbare Anlage, insbesondere Produktionsanlage.

Das programmierbare System weist insbesondere auf:
- industrielle Geräte und/oder
- app-fähige Geräte und/oder
- programmierbare Geräte.

Die auftretenden Ereignisse durch die Vielzahl von Software-Komponenten sind zu verstehen als tatsächlich auftretende Ereignisse und/oder tatsächlich durchgeführte Ereignisse. Die auftretenden Ereignisse haben insbesondere Auswirkungen auf die Vielzahl von Software-Komponenten, System-Komponenten, RAM-Arbeitsspeicher, Node Version Manager (NVM) und/oder internen Bus des programmierbaren Systems.

Der generierte Log-Datensatz umfasst vorzugsweise eine Identifikationsinformation des programmierbaren Systems. Weiterhin kann der generierte Log-Datensatz die erkannte Anwendungsfunktionalität angeben. Außerdem kann bei der Ableitung der Anwendungsfunktionalität durch die Ableitungskomponente ermittelt werden, welche Software-Komponenten bei der erkannten Anwendungsfunktionalität involviert sind. Die Information zu den bei der erkannten Anwendungsfunktionalität involvierten Softwarekomponenten kann ebenfalls in dem Log-Datensatz umfasst sein. Weiterhin kann der Log-Datensatz eine Zeitstempel-Information umfassen, die abhängig vom Zeitpunkt oder Zeitraums des Auftretens der Rohdaten ermittelt wird.

Reine Anwendungsdaten, die die Applikation zur Laufzeit generiert, (d.h. innere Daten einer App, zum Beispiel, das, was Algorithmen der App machen; wie die App ihre Aufgaben umsetzt; das was innerhalb der App wie abläuft; also alles, das über den nach außen sichtbaren Input und Output der App hinausgeht), kann die Überwachungseinheit natürlich nicht erfassen oder rekonstruieren.

Die Ableitungskomponente ist ausgebildet jeweils die Anwendungsfunktionalität der Vielzahl an Software-Komponenten aus den durch die Rohdaten erfassten auftretenden Ereignisse abzuleiten. Die Anwendungsfunktionalität wird somit nicht gemessen, sondern abgeleitet. "Abgeleitet" ist auch zu verstehen als "ermittelt", "synthetisiert", "aus den Rohdaten geschlussfolgert" und/oder "aus den Rohdaten geschlossen". Die Anwendungsfunktionalität gibt somit an, was von die Ableitungskomponente erwartet wird, welche Anwendungsfunktionalität stattgefunden hat/ausgeführt wurde. Die Anwendungsfunktionalität der Vielzahl an Software-Komponenten ist somit insbesondere zu verstehen als eine Schätzung und/oder ein Erwartungswert der Anwendungsfunktionalität der Vielzahl von Software-Komponenten; u.a. unter Anwendung von Regeln und/oder eine künstliche Intelligenz (KI).

Die Anwendungsfunktionalität ist dabei eine übergeordnete Funktionalität, auch als Hauptaufgabe und/oder Zweck und/oder Aufgabe der jeweiligen Software-Komponenten der Vielzahl an Software-Komponenten zu verstehen. Die Anwendungsfunktionalität ist somit die Funktionalität, für die die jeweilige Software-Komponente in erster Linie vorgesehen ist. Insbesondere ist die Anwendungsfunktionalität eine Steuerfunktion bei einer Steuer-Software-Komponente, eine Produktionsfunktion bei einer Produktion-Software-Komponente und/oder eine Fräsfunktion bei einer Fräs-Software-Komponenten. Wenn z.B. eine App eine Steuerungsfunktionalität für eine Maschine realisiert (virtualisierte PLC, virtualisiertes Steuergerät), dann kann der Log-Datensatz eine Maschinensteuerfunktionalität betreffen, z.B. Maschine in Standby, Hochlauf, Betrieb, Maschine in Wartungsmodus, Fehlermodus, ein Stück produziert, ein Stück Ausschuss etc.

Die Software-Komponenten sind insbesondere ausgebildet als:
- Apps, auch als Applikationen und/oder Anwendungsprogramme bezeichenbar, und/oder
- Software-Programme,
jeweils insbesondere von Drittanbietern stammend und dadurch auf das programmierbare System nach Auslieferung durch den Hersteller nachladbar.

Ein Aspekt der Erfindung besteht darin, einen Logging-Mechanismus bereitzustellen, welcher zum einen zuverlässig und unabhängig von der Logik der einzelnen Software-Komponenten (Applikationen) den Log-Datensatz generiert, um die Abhängigkeit von dem durch eine Software-Komponente selbst bereitgestellten Log-Datensatz zu reduzieren. Des Weiteren kann dieser Logging-Mechanismus so ausgelegt sein, der generierte Log-Datensatz zuverlässig in eine Log-Datenbank für die weitere Auswertung durch einen Anwender bzw. durch ein IDS schreiben zu können. Dazu kann er den Log-Datensatz z.B. lokal bis zur erfolgten Übertragung zwischenspeichern oder durch eine kryptographische Prüfsumme schützen.

Hierfür wird eine Überwachungseinheit, insbesondere ein "Trusted Observer" (TO), vorgeschlagen, der system-weit, zentral, unabhängig und vertrauensvoll auftretende Ereignisse erfasst, indem er die laufenden Software-Komponenten, System-komponenten oder anderweitiges Systemverhalten beobachtet, selbständig aus seinen Beobachtungen den Log-Datensatz generiert, und diesen insbesondere in eine Log-Datenbank überträgt.

Dies bedeutet, dass nicht mehr die Software-Komponenten selbst die Logdaten erzeugen, sammeln und/oder in die Datenbank schreiben müssen - dies kann zusätzlich zu der Idee der Erfindung weiterhin geschehen, ist aber nicht obligatorisch. Durch die vorgestellte Überwachungseinheit ist es nicht mehr notwendig, dass eine Software-Komponente den auswertbaren Log-Datensatz erzeugt, sondern der Log-Datensatz wird in der Überwachungseinheit erzeugt. Dieser Log-Datensatz kann als synthetischer Log-Datensatz betrachtet werden, da er nicht die eigene Funktionalität der Überwachungseinheit angibt, sondern eine Fremdfunktionalität synthetisiert. Der Log-Datensatz wird somit nicht von der Ereignis-erzeugenden Komponente selbst erstellt.

In einer Weiterbildung der Erfindung sind die auftretenden Ereignisse ausgebildet als:
- ein Verhalten des programmierbaren Systems und/oder
- eine Reaktion des programmierbaren Systems und/oder
- eine Aktion auf dem programmierbaren System und/oder
- eine Auswirkung auf das programmierbare System.

Die genannten Optionen des/auf dem/des/auf das programmierbare System, gelten insbesondere für weitere Software-Komponenten (Apps) des programmierbaren Systems und/oder Komponenten des programmierbaren Systems und/oder Ressourcen des programmierbaren Systems.

Somit werden insbesondere das Laufzeitverhalten einer Applikation oder einer Systemkomponente, welche Auswirkungen auf Systemressourcen (CPU, Speicher, interne Bussysteme, Netzwerkschnittstellen, ...) hat, durch die Überwachungseinheit und deren Erfassungskomponente erfasst.

In einer weiteren Weiterbildung der Erfindung weisen die auftretenden Ereignisse auf:
- einen Zugriff auf einen Speicher und/oder
- eine Konfiguration eines Speichers und/oder
- eine Verwendung eines Datenbusses und/oder
- einen Aufruf eines Betriebssystems und/oder
- einen Zugriff auf eine Ein- und/oder Ausgabekomponente und/oder
- einen Zugriff auf eine Datei und/oder
- einen Zugriff auf das programmierbare System von außerhalb des programmierbaren Systems und/oder
- einen Zugriff auf das programmierbare System über einen Seitenkanal und/oder
- einen Aufbau und/oder ein Nutzen und/oder ein Beenden einer Netzwerkverbindung und/oder
- einen Aufbau und/oder ein Nutzen und/oder ein Beenden einer Kommunikationsverbindung.

Die auftretenden Ereignisse sind auch als Low-Level-Events zu verstehen.

Die auftretenden Ereignisse sind im Konkreten ausgebildet als:
- Zugriffe auf bestimmte System-Speicherbereiche ohne DMA oder mit DMA (CPU-Register, RAM, interner Flash, externer Flash, ...)
- System-interne Datenbusse
- Zugriffe auf das System über Seitenkanäle (z.B. Spannungsimpulse, Temperatur, ...)
- Scheduling des Systems, z.B. über das Laufzeitverhalten von Apps
- Konfiguration der MMU, MPU, ...
- Alle Komponenten, die auch in herkömmlichen Systemen Logdaten generieren wie z.B. laufende Applikationen
- der Aufbau, die Nutzung und/oder das Beenden einer Kommunikationsverbindung,
   - die Nutzung einer Interprozess-Kommunikation,
   - ein direkter Speicherzugriff (DMA),
   - der Zugriff auf Ein-/Ausgabe-Komponenten (z.B. Sensoren, Aktuatoren),
   - das Ändern von Dateien in Ordnern, die für Konfigurationsdateien von Applikationen vorgesehen sind (z.B. auf dem Host, oder ein dedizierter Ordner für ein proprietäres App-Format).

In einer weiteren Weiterbildung der Erfindung ist die Anwendungsfunktionalität ausgebildet als:
- eine übergeordnete Funktionalität und/oder
- ein Zweck und/oder
- eine Hauptaufgabe
der jeweiligen Software-Komponenten der Vielzahl an Software-Komponenten.

Die Anwendungsfunktionalität ist dabei eine übergeordnete Funktionalität, auch als Hauptaufgabe und/oder Zweck und/oder Aufgabe der jeweiligen Software-Komponenten der Vielzahl an Software-Komponenten zu verstehen. Die Anwendungsfunktionalität ist somit die Funktionalität, für die die jeweilige Software-Komponente in erster Linie vorgesehen ist. Insbesondere ist die Anwendungsfunktionalität eine Steuerfunktion bei einer Steuer-Software-Komponente, eine Produktionsfunktion bei einer Produktion-Software-Komponente und/oder eine Fräsfunktion bei einer Fräs-Software-Komponenten. Wenn z.B. eine App eine Steuerungsfunktionalität für eine Maschine realisiert (virtualisierte PLC, virtualisiertes Steuergerät), dann kann der Log-Datensatz eine Maschinensteuerfunktionalität betreffen, z.B. Maschine in Standby, Hochlauf, Betrieb, Maschine in Wartungsmodus, Fehlermodus, ein Stück produziert, ein Stück Ausschuss etc.

In einer weiteren Weiterbildung der Erfindung ist die Generierungskomponente außerdem ausgebildet, den Log-Datensatz und die im Log-Datensatz enthaltenen Daten in einem einheitlichen Format zu generieren.

Dies bedeutet, dass die Log-Daten des Log-Datensatzes ein einheitliches Format aufweisen. Das einheitliche Format ist auch als ein gleiches Format zu verstehen. Das einheitliche Format hat den Vorteil, dass die Daten untereinander vergleichbar sind und/oder auf die gleiche Art weiterverarbeitet werden können.

Im Stand der Technik ist das Verfahren zum Sammeln vom Log-Daten hingegen nicht auf verlässliche Art und Weise implementiert. Die Art und die Anzahl der Log-Daten hängen in der Regel von der Applikation oder der Systemkomponente ab, welche die Log-Daten bereitstellt. So können die Log-Daten auch unterdrückt werden oder von einem Angreifer manipuliert werden.

Wenn Apps von Drittanbietern bereitgestellt werden, muss in der aktuellen Praxis davon ausgegangen werden, dass die Drittanbieter Log-Daten nicht auf eine einheitliche Art bereitstellen. Auch ist es möglich, dass manche Apps gar keine Log-Daten bereitstellen, oder dass sie nur unzureichende Log-Daten bereitstellen.

Durch diese Ausführungsform der Erfindung wird hingegen erreicht, dass auch auf offenen Plattformen, auf denen Apps mit unterschiedlichem Ursprung ausgeführt werden, verlässlich und einheitlich Log-Daten für alle ausgeführten Apps vorliegen.

In einer weiteren Weiterbildung der Erfindung ist die Erfassungskomponente außerdem ausgebildet auf das programmierbare System im Gesamten zuzugreifen, um die Rohdaten zu erfassen.

Dies bedeutet, dass die Erfassungskomponente auf das gesamte programmierbare System Zugriff hat und Rohdaten des gesamten programmierbaren Systems erfasst. Die Erfassungskomponente hat somit auf alle auf dem programmierbaren System vorliegenden Komponenten, insbesondere Datenbusse, Memory-Controller, Scheduling-Informationen, Zugriff. Dies hat den Vorteil, dass sich keine Software-Komponente der Beobachtung / Rohdatenerfassung durch die Erfassungskomponente entziehen kann, da sie andernfalls nicht mehr ihre zugedachte Funktionalität ausführen könnte, denn ihre zugedachte Funktionalität wird immer zu auftretenden Ereignissen auf dem programmierbaren System führen. Die Überwachungseinheit würde diesen Entzug erkennen und dies insbesondere als auftretendes Ereignis in den Rohdaten erfassen und insbesondere als ein sicherheitsrelevantes Ereignis (security-relevantes Event) melden.

In einer weiteren Weiterbildung der Erfindung weist die Überwachungseinheit außerdem einen Integritätsschutz auf. Der Integritätsschutz schützt die Überwachungseinheit vor Manipulation.

Die Integration der Überwachungseinheit in das programmierbare System (Gesamtsystem) kann so gestaltet sein, dass die Überwachungseinheit nicht deaktiviert oder umgangen werden kann. Außerdem ist die Überwachungseinheit und deren Konfiguration nicht einfach manipulierbar. Der Integritätsschutz hat den Vorteil, dass dadurch umsetzbar ist, dass nur vertrauenswürdiges Personal Zugriff auf die Überwachungseinheit hat und diese konfigurieren oder deaktivieren kann. Zusätzlich ist eine physikalische Separierung der Überwachungseinheit im programmierbaren System von Vorteil. So ist eine zuverlässige Erfassung der Rohdaten gewährleistet.

In einer weiteren Weiterbildung der Erfindung ist die Generierungskomponente außerdem ausgebildet, den Log-Datensatz kryptographisch zu schützen.

Der Log-Datensatz weist somit einen kryptographischen Schutz auf. Dies hat den Vorteil, dass der Log-Datensatz nicht einfach manipulierbar ist.

In einer weiteren Weiterbildung der Erfindung besteht zwischen der Überwachungseinheit und der Vielzahl der Software-Komponenten eine logische Abhängigkeit.

Die logische Abhängigkeit besteht insbesondere zwischen der Funktion von Software-Komponenten und der Konfiguration der Überwachungseinheit. Insbesondere wird abhängig von der konkreten Konfiguration der Überwachungseinheit Schlüsselmaterial generiert, das dann von den Software-Komponenten verwendet wird. Eine Re-Konfiguration und/oder Deaktivierung der Überwachungseinheit ist dadurch nicht möglich. Die Überwachungseinheit ist insbesondere Teil einer App-Laufzeitumgebung, die API-Aufrufe der ausgeführten Apps überwacht.

In einer weiteren Weiterbildung der Erfindung weist die Überwachungseinheit außerdem auf:
- eine Bindungskomponente, ausgebildet kryptographisches Schlüsselmaterial bereitzustellen, wobei die Verwendung des kryptographisches Schlüsselmaterials für die Vielzahl der Software-Komponenten obligatorisch zur Ausführung derer zugehörigen Anwendungsfunktionalität ist.

Durch die Bindungskomponente wird eine Bindung zwischen der Vielzahl der Software-Komponenten und der Überwachungseinheit erzeugt. Die zugehörige Anwendungsfunktionalität der Vielzahl der Software-Komponenten ist auch als deren vorgesehene Anwendungsfunktionalität zu verstehen und korrespondiert insbesondere mit der Anwendungsfunktionalität, welche durch den Log-Datensatz angegeben ist und durch die Ableitungskomponente aus den auftretenden Ereignissen abgeleitet wird. Durch die Ausführung der zugehörigen Anwendungsfunktionalität werden die auftretenden Ereignisse erzeugt, welche wiederrum von der Erfassungskomponente in Form der Rohdaten erfasst werden.

In einer weiteren Weiterbildung der Erfindung weist die Überwachungseinheit außerdem auf:
- eine Datenbank, ausgebildet den Log-Datensatz zu speichern.

Bevorzugt sind die Überwachungseinheit und die Datenbank vertrauenswürdig miteinander verbunden. Manipulationen an der Datenbank sollten nicht möglich sein. Bevorzugt ist die Log-Datenbank deshalb ein Bestandteil der Überwachungseinheit.

Die Datenbank kann so gestaltet sein, dass sie vom beobachteten programmierbaren System aus lesbar ist, es ist allerdings auch vorstellbar, dass die Datenbank nur von der Überwachungseinheit aus lesbar ist.

Bevorzugt ist die Datenbank außerdem vom beobachteten programmierbaren System getrennt, wodurch auch ein Schreiben und Speichern des Log-Datensatzes zuverlässig ist.

In einer weiteren Weiterbildung der Erfindung weist die Überwachungseinheit außerdem auf:
- eine Analysekomponente, ausgebildet den Log-Datensatz hinsichtlich sicherheitsrelevanter Ereignisse zu analysieren (d.h. auszuwerten).

Diese Analyse dient dazu, Fehler im programmierbaren System zu finden, aber auch, erfolgte Angriffe und mögliche Schwachstellen zu entdecken und Gegenmaßnahmen einzuleiten. Von der Analysekomponente werden hierfür insbesondere spezielle Anwendungen wie z.B. Intrusion Detection Systeme (IDS (z.B. HIDS, NIDS, ...)) oder SIEM (Security information and event management) verwendet. Eine Überwachungseinheit ist mit dieser Eigenschaft nicht als Alternative zu einem IDS zu sehen, sondern als Einheit, die für ein IDS in zuverlässiger Weise auswertbare Daten zur Verfügung stellt.

Die Erfindung umfasst außerdem ein technisches System, aufweisend:
- Überwachungseinheit nach einem der vorherigen Ansprüche, und
- ein programmierbares System, aufweisend:
   - eine Laufzeitumgebung für die Vielzahl von Software-Komponenten.

Die Überwachungseinheit ist hierbei bevorzugt extern des programmierbaren Systems angeordnet. Damit ist die Überwachungseinheit unabhängig von dem programmierbaren System und vor Manipulation geschützt.

Die Erfindung umfasst außerdem ein Verfahren zum Generieren eines Log-Datensates, mit den Schritten:
- Ein Erfassen von Rohdaten bezüglich auftretender Ereignisse auf einem programmierbaren System, wobei die auftretenden Ereignisse durch eine Vielzahl von Software-Komponenten des programmierbaren Systems erzeugt werden, und wobei die auftretenden Ereignisse insbesondere Auswirkungen auf die Vielzahl von Software-Komponenten, System-Komponenten, RAM-Arbeitsspeicher, Node Version Manager (NVM) und/oder internen Bus des programmierbaren Systems haben,
- ein Ableiten jeweils einer Anwendungsfunktionalität der Vielzahl an Software-Komponenten aus den durch die Rohdaten erfassten auftretenden Ereignisse, und
- das Generieren des Log-Datensatzes, wobei der Log-Datensatz die Anwendungsfunktionalität der Vielzahl von Software-Komponenten des programmierbaren Systems angibt.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm und Komponenten nach dem Stand der Technik,
- Fig. 2: ein Ablaufdiagramm und Komponenten gemäß der Erfindung, und
- Fig. 3: eine schematische Darstellung eines technischen Systems aufweisend erfindungsrelevante Komponenten.

### DETAILLIERTE BESCHREIBUNG DER ERFINDUNG

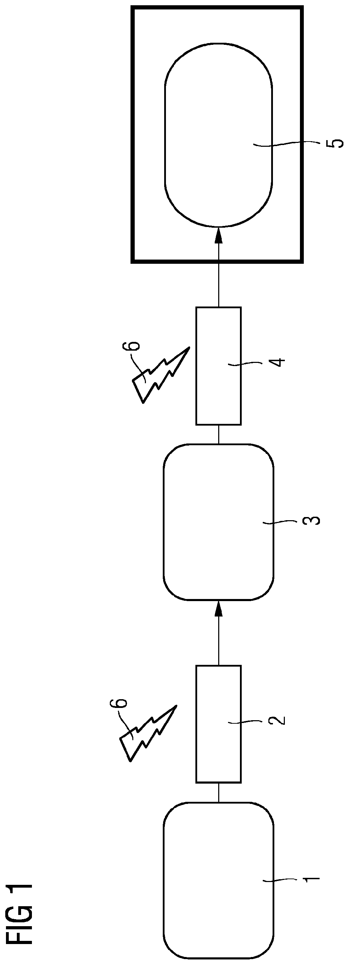

Fig. 1 zeigt einen herkömmlichen Ansatz für das Logging: Applikationen 1 und/oder Software-Komponenten 1 selbst generieren und stellen Log-Datensätze 2 an einen Logging-Mechanismus 3 zu Verfügung. Der Logging-Mechanismus schreibt 4 die Log-Datensätze 2 in eine Log-Datenbank 5. Sowohl die Generierung 2 der Log-Datensätze als auch das Schreiben 4 der Daten kann hier angegriffen werden.

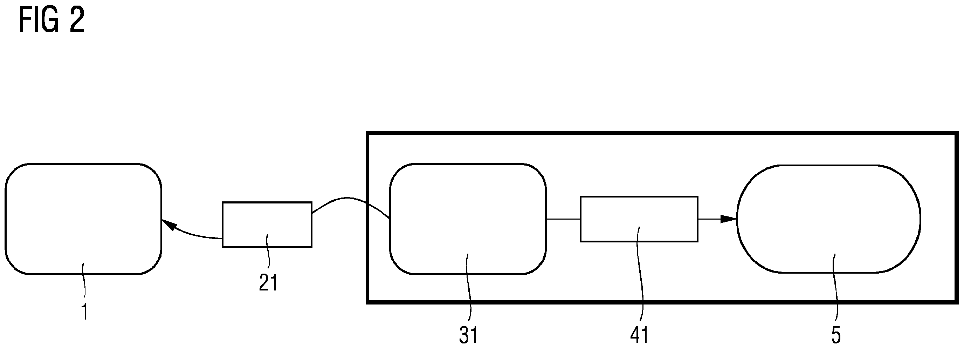

Fig. 2 zeigt einen Ansatz gemäß der Erfindung für das Logging: Applikationen 1 und/oder Software-Komponenten 1 werden von der Überwachungseinheit 31 überwacht. Die Überwachungseinheit 31 generiert die Log-Datensätze 21 und schreibt 41 die Log-Datensätze 21 in eine Log-Datenbank 5. Sowohl die Generierung der Log-Datensätze 21 als auch das Schreiben 41 der Log-Datensätze 21 unterliegt der Überwachungseinheit 31 und ist davor geschützt angegriffen zu werden.

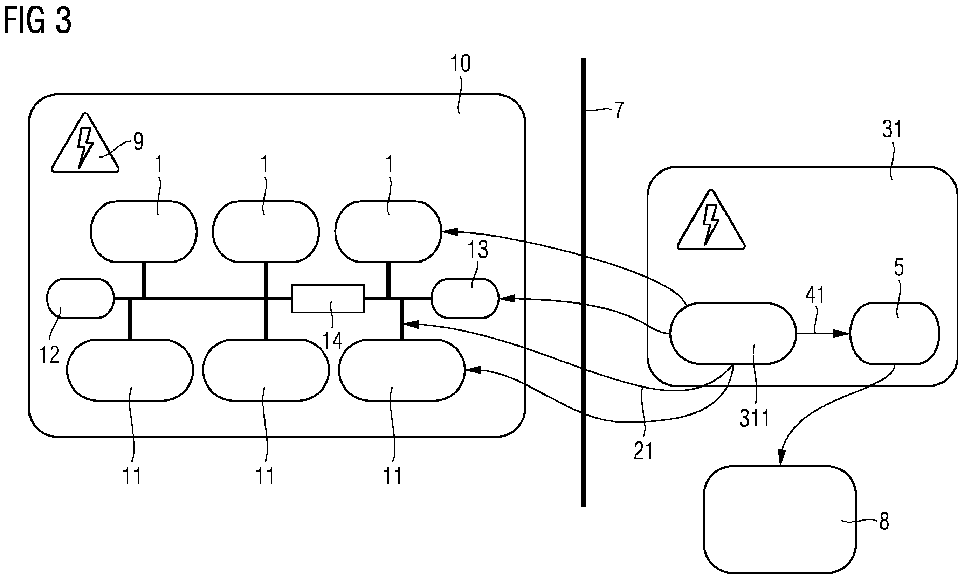

Fig. 3 zeigt ein technisches System, aufweisend:
- ein programmierbares System 10, aufweisend:
   ▪ eine Laufzeitumgebung für die Vielzahl von Software-Komponenten 1,
   ▪ die Vielzahl von Software-Komponenten 1,
   ▪ System-Komponenten 11
   ▪ einen RAM-Arbeitsspeicher 12
   ▪ einen Node Version Manager (NVM) 13
   ▪ einen internen Bus 14
   ▪ eine eigene Stromversorgung 9.
- eine erfindungsgemäße Überwachungseinheit 31, aufweisend:
   ▪ eine Erfassungskomponente 311, ausgebildet Rohdaten bezüglich auftretender Ereignisse auf dem programmierbaren System 10 zu erfassen, wobei die auftretenden Ereignisse durch eine Vielzahl von Software-Komponenten 1 des programmierbaren Systems 10 erzeugt werden, und wobei die auftretenden Ereignisse insbesondere Auswirkungen auf die Vielzahl von Software-Komponenten 1, System-Komponenten 11, RAM-Arbeitsspeicher 12, Node Version Manager (NVM) 13 und/oder internen Bus 14 des programmierbaren Systems 10 haben,
   ▪ eine Ableitungskomponente (nicht gezeigt), ausgebildet jeweils eine Anwendungsfunktionalität der Vielzahl an Software-Komponenten 1 aus den durch die Rohdaten erfassten auftretenden Ereignisse abzuleiten, und
   ▪ eine Generierungskomponente, ausgebildet Log-Datensätze 21 zu generieren, wobei die Log-Datensätze 21 die Anwendungsfunktionalität der Vielzahl von Software-Komponenten 2 des programmierbaren Systems 10 angeben,
   ▪ eine Datenbank 5, ausgebildet die Log-Datensätze 41 zu speichern,
- eine Analysekomponente 8, ausgebildet die Log-Datensätze 41 hinsichtlich sicherheitsrelevanter Ereignisse zu analysieren.

Die Überwachungseinheit 31 ist durch eine physikalische Separierung 7 vom beobachteten programmierbaren System 10 getrennt. Die beobachteten Log-Datensätze schreibt 41 die Überwachungseinheit 31 in eine Log-Datenbank 5, die von einem entsprechenden Analyzer-Tool 8 ausgelesen werden können.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Überwachungseinheit (31) zum Überwachen eines programmierbaren Systems (10),
aufweisend:
- Eine Erfassungskomponente, ausgebildet Rohdaten bezüglich auftretender Ereignisse auf dem programmierbaren System (10) zu erfassen, wobei die auftretenden Ereignisse durch eine Vielzahl von Software-Komponenten (1) des programmierbaren Systems (10) erzeugt werden,
- eine Ableitungskomponente, ausgebildet jeweils eine Anwendungsfunktionalität der Vielzahl an Software-Komponenten (1) aus den durch die Rohdaten erfassten auftretenden Ereignisse abzuleiten, und
- eine Generierungskomponente (311), ausgebildet einen Log-Datensatz (21) zu generieren, wobei der Log-Datensatz (21) die Anwendungsfunktionalität der Vielzahl von Software-Komponenten (1) des programmierbaren Systems (10) angeben.

2. Überwachungseinheit (31) nach Anspruch 1,
wobei die auftretenden Ereignisse ausgebildet sind als:
- ein Verhalten des programmierbaren Systems (10) und/oder
- eine Reaktion des programmierbaren Systems (10) und/oder
- eine Aktion auf dem programmierbaren System (10) und/oder
- eine Auswirkung auf das programmierbare System (10).

3. Überwachungseinheit (31) nach einem der vorhergehenden Ansprüche,
wobei die auftretenden Ereignisse aufweisen:
- einen Zugriff auf einen Speicher (12) und/oder
- eine Konfiguration eines Speichers (12) und/oder
- eine Verwendung eines Datenbusses (14) und/oder
- einen Aufruf eines Betriebssystems und/oder
- einen Zugriff auf eine Ein- und/oder Ausgabekomponente und/oder
- einen Zugriff auf eine Datei und/oder
- einen Zugriff auf das programmierbare System (10) von außerhalb des programmierbaren Systems und/oder
- einen Zugriff auf das programmierbare System (10) über einen Seitenkanal und/oder
- einen Aufbau und/oder ein Nutzen und/oder ein Beenden einer Netzwerkverbindung und/oder
- einen Aufbau und/oder ein Nutzen und/oder ein Beenden einer Kommunikationsverbindung.

4. Überwachungseinheit (31) nach einem der vorhergehenden Ansprüche,
wobei die Anwendungsfunktionalität ausgebildet ist als:
- eine übergeordnete Funktionalität und/oder
- ein Zweck und/oder
- eine Hauptaufgabe
der jeweiligen Software-Komponenten (1) der Vielzahl an Software-Komponenten (1).

5. Überwachungseinheit (31) nach einem der vorhergehenden Ansprüche,
wobei die Generierungskomponente (311) außerdem ausgebildet ist, den Logdatensatz und von ihm aufgewiesene Log-Daten (21) in einem einheitlichen Format zu generieren.

6. Überwachungseinheit (31) nach einem der vorhergehenden Ansprüche,
wobei die Erfassungskomponente außerdem ausgebildet ist auf das programmierbare System (10) im Gesamten zuzugreifen, um die Rohdaten zu erfassen.

7. Überwachungseinheit (31) nach einem der vorhergehenden Ansprüche,
außerdem einen Integritätsschutz aufweisend.

8. Überwachungseinheit (31) nach einem der vorhergehenden Ansprüche,
wobei die Generierungskomponente (311) außerdem ausgebildet ist, den Log-Datensatz (21) kryptographisch zu schützen.

9. Überwachungseinheit nach einem der vorhergehenden Ansprüche,
wobei zwischen der Überwachungseinheit (31) und der Vielzahl der Software-Komponenten (1) eine logische Abhängigkeit besteht.

10. Überwachungseinheit (31) nach einem der vorhergehenden Ansprüche,
außerdem aufweisend:
- eine Bindungskomponente, ausgebildet kryptographisches Schlüsselmaterial bereitzustellen, wobei die Verwendung des kryptographisches Schlüsselmaterials für die Vielzahl der Software-Komponenten obligatorisch zur Ausführung derer zugehörigen Anwendungsfunktionalität ist.

11. Überwachungseinheit (31) nach einem der vorhergehenden Ansprüche,
außerdem aufweisend:
- eine Datenbank (5), ausgebildet den Log-Datensatz (21) zu speichern.

12. Überwachungseinheit (31) nach einem der vorhergehenden Ansprüche,
außerdem aufweisend:
- eine Analysekomponente, ausgebildet den Log-Datensatz (21) hinsichtlich sicherheitsrelevanter Ereignisse zu analysieren.

13. Technisches System, aufweisend:
- Überwachungseinheit (31) nach einem der vorherigen Ansprüche, und
- ein programmierbares System (10), aufweisend:
- eine Laufzeitumgebung für die Vielzahl von Software-Komponenten (1).

14. Verfahren zum Generieren von einem Log-Datensatz (21), mit den Schritten:
- Ein Erfassen von Rohdaten bezüglich auftretender Ereignisse auf einem programmierbaren System (10), wobei die auftretenden Ereignisse durch eine Vielzahl von Software-Komponenten (1) des programmierbaren Systems (10) erzeugt werden,
- ein Ableiten jeweils einer Anwendungsfunktionalität der Vielzahl an Software-Komponenten (10) aus den durch die Rohdaten erfassten auftretenden Ereignisse, und
- das Generieren des Log-Datensatzes (21), wobei der Log-Datensatz (21) die Anwendungsfunktionalität der Vielzahl von Software-Komponenten (1) des programmierbaren Systems (10) angeben.
